# EUROPEAN PATENT SPECIFICATION

(11) **EP 2 799 199 B1**
(45) Date of publication and mention of the grant of the patent: **07.04.2021**
(21) Application number: 12863321.1
(22) Date of filing: 28.12.2012
(51) Int. Cl.: B27K 7/00, B67B 1/03

(54) **METHOD FOR REMOVING VARIOUS UNDESIRABLE COMPOUNDS FROM CORK**
VERFAHREN ZUR ENTFERNUNG VON VERSCHIEDENEN UNERWÜNSCHTEN BESTANDTEILEN AUS KORK
PROCÉDÉ D'EXTRACTION DE DIVERS COMPOSÉS INDÉSIRABLES DU LIÈGE

(30) Priority: 30.12.2011 ES 201101379
(43) Date of publication of application: 05.11.2014
(73) Proprietor: Asociacion de Investigacion de la Industria Agroalimentaria, 46980 Paterna (Valencia) (ES)
(72) Inventor: TORNERO MARTOS, Antonio Jesús, 46980 Paterna (Valencia) (ES); TORREJÓN CABELLO, Ana, 46980 Paterna (Valencia) (ES); MONTAÑÉS BARONA, Juan, 46980 Paterna (Valencia) (ES); CASAS SANZ, Elvira, 46980 Paterna (Valencia) (ES); GARCÍA REVERTE, José, 46980 Paterna (Valencia) (ES); BLASCO PIQUER, Miguel, 46980 Paterna (Valencia) (ES); SUBIRATS HUERTA, Sebastián, 46980 Paterna (Valencia) (ES)
(74) Representative: Mohammadian, Dario
(86) International application number: PCT/ES2012/000328
(87) International publication number: WO 2013/098440

(56) References cited:
- EP-A1- 2 404 647
- WO-A1-2005/025825
- WO-A1-2010/093273
- US-A1- 2007 264 175
- DATABASE WPI Derwent Publications Ltd., London, GB; AN 2005-242300, XP003031962 & WO 2005 025825 A1 (DEGUSSA AG) 24 March 2005

## Description

### OBJECT OF THE INVENTION

The invention refers to a method for extracting various unwanted compounds from cork, especially compounds responsible for unwanted tastes and/or odours, such as phenolic compounds or anisole derivatives.

### BACKGROUND OF THE INVENTION

Cork is a material of natural origin that is used in various sectors, highlighted by its use as acoustic insulator, decorative element and in the food industry. In the case of its food applications, and especially in the case of forming stoppers for bottles containing liquids for drinking, the cork should maintain its important natural physical properties: density, moisture, gas permeability and resilient compressibility, but, additionally, certain substances generated naturally but having unwanted aromatic effects should be absent in its composition, such as for example haloanisoles, especially the trichloroanisole family (TCA), other phenolic components, and some aromatic substances present in smaller proportion. The cork that contains amounts of these natural components in the range of parts per billion, when kept in contact with certain foods, for example wine, can cause therein terrible changes of aroma and taste.

The character of a natural product means that the content of unwanted products in the cork has an uncontrollable variability, depending for example on the level of exposure to contaminants, on the geographic origin, on the climatic conditions, or simply on the storage conditions. Current methods of removing the mentioned unwanted products do not ensure that the treatments for removal yield the desired quality every time and in the same conditions.

Traditionally, the way to remove the unwanted products from cork has consisted in maintaining the same in boiling water at 120 °C under pressure. Other methods have been used like the washing of cork with bleach and then with organic acids, either with hydrogen peroxide, or with aqueous solutions of sulphuric anhydride. None of these measures is fully satisfactory, since the removal of the unwanted substances is not complete, or the properties of the material (density, moisture, permeability and/or compressibility) are modified. Due to the mentioned limitations there has been continued search for other extraction processes of unwanted compounds in cork.

One of the alternative methods that has been developed for the removal of unwanted components in the cork has been the use of supercritical fluids. Supercritical fluids have been used for decades to obtain compounds with high added value, such fluids being used as extracting agents to remove or extract determined compounds.

In the literature there can be found some processes of extraction with supercritical fluids applied to cork. Thus, in the work of Miranda et al., 1996 (Miranda, A.M., Reis Machado, A.S., Pereira, H., Nunes da Ponte, M., (1996). High pressure extraction of cork with carbonic anhydride and 1,4-dioxane.. In Ph. Rudolf von Rohr and Ch. Trepp (Ed.) Process Technology Proceedings, Volume 12, High Pressure Chemical Engineering, (p. 417-422), Amsterdam: Elsevier Science) a method for the treatment of cork is described by means of a mixture of carbon dioxide and dioxane at pressures higher than 100 bar and temperatures ranging from 160 °C to 180 °C with the aim of extracting suberin. The extraction of suberin from cork modifies the internal structure of the material and, thus, the elastic properties thereof.

The process described in the application PCT/FR00/02653, of 1999 from which other patents have been derived (EP1216123B1, ES2216965 and US7192490) uses supercritical fluids for removing unwanted organic compounds. In this case, supercritical carbon dioxide is used in combination with a co-solvent (preferably water). In the patent, it is literally indicated that "the water, even at a low proportion, in the presence of CO₂, can produce carbonic acid and give an acidic pH to the mixture." This acidic pH, however, alter the gas permeability of the treated cork. These processes that use co-solvents involve the subsequent difficulty of purification of the solvent or adjusting the proportions of the mixtures. Furthermore this treatment ignores the cork recontamination due to the extracted organic compounds present in the solvent after the extraction, which results in an increased inefficiency of the successive extraction processes, particularly if it is a process in which the initial concentration of the unwanted compounds is very high.

In document WO2010/093273 A1 a method is described for treating already shaped cork stoppers with supercritical fluids. An unwanted deformation of the stoppers subjected to this treatment has been observed when the conditions described in this document have been repeated.

The document WO2010/040949 A1, from 2010 also considers the use of pressurization and depressurization cycles for treating a cork immersed in a medium of water vapour and air. The treatment times of this process are, however, more than 5 hours, and this prolonged treatment time is of little interest to the industry.

None of these current methods can provide cork at an acceptable industrial cost, by means of an environmentally sustainable process, with the desirable absence of TCA, without sensitive variations of density or moisture or a noticeable reduction in permeability or elasticity, all this at once. Further ways of extracting undesired substances from cork by employing near-critical or supercritical fluids are known for example from the patent publications WO2005025825 A1, WO2005049170 A1, or EP2404647 A1.

### DESCRIPTION OF THE INVENTION

The present invention consists in a method which provides, at an acceptable industrial cost, with a method time of less than 60 minutes, a cork whose possible content of unwanted aromatic compounds, and in particular TCA (trichloroanisoles) is undetectable and without sensitive variation of density or moisture or noticeable reduction in permeability and elasticity, all this at once.

In this method preferably granulated cork is used; already shaped cork objects can directly be used as well. The cork is treated with a current of dense gas, so that the compounds to be extracted from the cork are also removed from the extraction process; wherein the dense gas is understood as a gas having a reduced pressure (exerted pressure/critical pressure) higher than 0.9; and having a reduced temperature (exerted temperature/critical temperature) higher than 0.9.

The invention considers that this dense gas may be subjected to a continuous purification and recycling, reducing the economic cost of the extracting gas, minimizing the environmental impact and ensuring that what has already been extracted is not reintroduced to the initial matrix.

### DESCRIPTION OF THE FIGURES

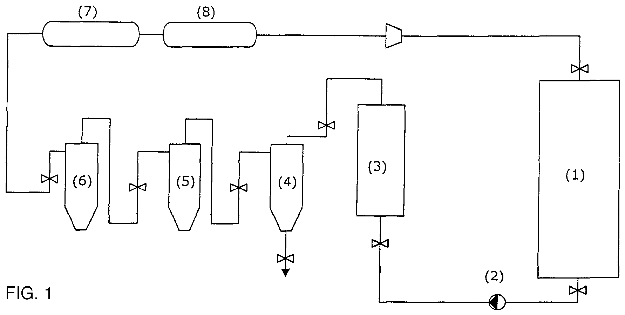

Figure 1 shows the flow of the present method, wherein
1.-Is the storage system of the dense gas.
2.-Is the impulse system.
3.-Is the suitable high pressure container where the dense gas is brought into contact with the material.
4, 5 and 6.-Are the containers where the successive purification steps of the dense gas are taking place once the contaminants have been extracted from the matrix.
7 and 8.-Are the filtering systems.

### PREFERRED EMBODIMENT OF THE INVENTION

In a suitable high pressure container are placed 10 kg of dry natural granulated cork and adjusted to a pressure of 165 bar and a temperature of 60 °C. The dense gas to be used is carbon dioxide (CO₂). The entering current of the dense gas is passed through a filtration system by means of molecular sieve which ensures the purity of the gas before the impulse step to reach the set pressure of the process.

The average time during which a determined fraction of the dense gas flow is in contact with the cork is about 5 minutes. After the extraction, the outgoing CO₂ is washed by passing it through an apolar liquid, acetones, ethers, or a mixture thereof, in which the major portion of the trichloroanisole and other extracts will be dissolved. The washed dense gas passes into a second container in which it is depressurized, and the gas is filtered through a fabric filter and, subsequently, at room temperature and 60 bar, it is passed through a filter of sintered material, with which good part of the foreign material of said gas is removed. The gaseous CO₂ is circulated through a bed of zeolites in which the last molecules not part of the gas which might remain are removed.

The remaining gaseous carbon dioxide, purified and anhydrous, is condensed again at a pressure of 60 bar and a temperature of 25 °C and is introduced into the storage tank mentioned in the first paragraph of this section, in which the gas is in liquid state.

Although the initial granulated cork used in different extractive processes had an initial content of TCA ranging from 100 ng/L in some cases up to 130 ng/L in other cases, not any of the known analytical methods detected the final presence of TCA in any of them. The properties of density, moisture, permeability and elastic compressibility of the cork so treated remain perfectly acceptable so that the desirable requirements set out above are met.

Faced with this 100% removal, it should be noted that in parallel extractions in which the physical conditions are repeated but the dense gas is not subjected to the described purification process, the removal of TCA from the cork matrix will be of only 62% after 20 consecutive treatment operations.

## Claims

1. Method for extracting various unwanted compounds from cork; and especially compounds responsible for unwanted tastes and/or odours, such as phenolic compounds or anisole derivatives; comprising the step of:
maintaining (2) the cork to be treated at a pressure ranging from 64 to 450 bar, a temperature between 27 °C and 90 °C and for a time of less than 60 minutes, in contact only with a dense gas, without co-solvents or additional co-additive substances which are different from the dense gas;
**characterized by** further comprising the purification (4, 5, 6, 7, 8) of the dense gas used for extracting the unwanted compounds from cork and the subsequent reuse of said purified dense gas in the method, wherein the purification comprises:
a step of washing with a solvent selected from: alcohols, ketones, ethers, esters or mixtures thereof;
a step of coarse filtering with a filter of a woven or non-woven material;
a step of fine filtering with a filter of sintered material; and
a step of an adsorption process with filters of: activated carbon, zeolites, silica gel, diatomaceous earth, mixtures of some or all of them.

2. The method according to claim 1, **characterized in that** it considers the use as a dense gas of at least one of the following gases: carbon dioxide, ethane, ethylene, dinitrogen monoxide, sulphur hexafluoride, trifluoromethane, trifluorochloromethane, 1,2-difluoroethylene, or octafluoropropane.

3. The method according to claims 1 and 2, **characterized in that** the dense gas originates from a continuous external source.

4. The method according to claim 1, **characterized in that** the washing, the coarse filtering, the fine filtering, and the adsorption process are applied to the dense gas in any order.

5. The method according to claim 1, **characterized in that** the washing, the coarse filtering, the fine filtering, and the adsorption process are applied in this order to the dense gas during its purification.

6. The method according to the preceding claims, wherein the cork is in the shape of granules, or stoppers, or sheets, or plates.

## Patentansprüche

1. Verfahren zum Extrahieren verschiedener unerwünschter Verbindungen aus Kork; und insbesondere Verbindungen, die für unerwünschte Geschmäcker und/oder Gerüche verantwortlich sind, wie phenolische Verbindungen oder Anisolderivate; umfassend den Schritt des:
Aufrechterhaltens (2) des zu behandelnden Korks bei einem Druck im Bereich von 64 bis 450 bar, einer Temperatur zwischen 27 °C und 90 °C und für eine Zeit von weniger als 60 Minuten, in Kontakt nur mit einem dichten Gas, ohne Co-Lösungsmittel oder zusätzliche Co-Additive, die von dem dichten Gas verschieden sind;
**dadurch gekennzeichnet, dass** es weiter das Reinigen (4, 5, 6, 7, 8) des dichten Gases, das zum Extrahieren der unerwünschten Verbindungen aus Kork verwendet wird, und die anschließende Wiederverwendung des gereinigten dichten Gases in dem Verfahren umfasst, wobei das Reinigen umfasst:
einen Schritt des Waschens mit einem Lösungsmittel, ausgewählt aus: Alkoholen, Ketonen, Ethern, Estern oder Mischungen davon;
einen Schritt des Grobfilterns mit einem Filter aus einem gewebten oder nicht gewebten Material;
einen Schritt des Feinfilterns mit einem Filter aus gesintertem Material; und
einen Schritt eines Adsorptionsverfahrens mit Filtern aus: Aktivkohle, Zeolithen, Silikagel, Diatomeenerde, Mischungen aus einigen oder allen von ihnen.

2. Verfahren nach Anspruch 1, **dadurch gekennzeichnet, dass** es die Verwendung von mindestens einem der folgenden Gase als dichtes Gas berücksichtigt: Kohlendioxid, Ethan, Ethylen, Distickstoffmonoxid, Schwefelhexafluorid, Trifluormethan, Trifluorchlormethan, 1,2-Difluorethylen oder Octafluorpropan.

3. Verfahren nach einem der Ansprüche 1 und 2, **dadurch gekennzeichnet, dass** das dichte Gas aus einer kontinuierlichen externen Quelle stammt.

4. Verfahren nach Anspruch 1, **dadurch gekennzeichnet, dass** das Waschen, das Grobfiltern, das Feinfiltern und das Adsorptionsverfahren in beliebiger Reihenfolge auf das dichte Gas angewendet werden.

5. Verfahren nach Anspruch 1, **dadurch gekennzeichnet, dass** das Waschen, das Grobfiltern, das Feinfiltern und das Adsorptionsverfahren in dieser Reihenfolge auf das dichte Gas während dessen Reinigung angewendet werden.

6. Verfahren nach den vorstehenden Ansprüchen, wobei der Kork in Form von Granulat, oder Stopfen, oder Blättern, oder Platten vorliegt.

## Revendications

1. Procédé d'extraction de divers composés indésirables du liège ; et notamment des composés responsables de goûts et/ou d'odeurs indésirables, tels que les composés phénoliques ou les dérivés d'anisole ; comprenant l'étape consistant à :
maintenir (2) le liège à traiter à une pression allant de 64 à 450 bar, à une température comprise entre 27 °C et 90 °C et pendant une durée inférieure à 60 minutes, en contact uniquement avec un gaz dense, sans co-solvants ou substances co-additives supplémentaires qui sont différents du gaz dense ;
**caractérisé en ce qu'**il comprend en outre la purification (4, 5, 6, 7, 8) du gaz dense utilisé pour extraire les composés indésirables du liège et la réutilisation ultérieure dudit gaz dense purifié dans le procédé, dans lequel la purification comprend :
une étape de lavage avec un solvant choisi parmi : les alcools, les cétones, les éthers, les esters ou des mélanges de ceux-ci ;
une étape de filtration grossière avec un filtre en matériau tissé ou non tissé ;
une étape de filtration fine avec un filtre en matériau fritté ; et
une étape d'un processus d'adsorption avec des filtres de : charbon actif, zéolites, gel de silice, terre de diatomées, mélanges de tous ou certains d'entre eux.

2. Procédé selon la revendication 1, **caractérisé en ce qu'**il considère l'utilisation comme gaz dense d'au moins un des gaz suivants : dioxyde de carbone, éthane, éthylène, monoxyde de diazote, hexafluorure de soufre, trifluorométhane, trifluorochlorométhane, 1,2-difluoroéthylène ou octafluoropropane.

3. Procédé selon les revendications 1 et 2, **caractérisé en ce que** le gaz dense provient d'une source externe continue.

4. Procédé selon la revendication 1, **caractérisé en ce que** le lavage, la filtration grossière, la filtration fine et le processus d'adsorption sont appliqués au gaz dense dans n'importe quel ordre.

5. Procédé selon la revendication 1, **caractérisé en ce que** le lavage, la filtration grossière, la filtration fine et le processus d'adsorption sont appliqués dans cet ordre au gaz dense lors de sa purification.

6. Procédé selon les revendications précédentes, dans lequel le liège est sous la forme de granulés ou de bouchons ou de feuilles ou de plaques.
